Europäisches Patentamt

European Patent Office

Office européen des brevets

(19)

(11) Veröffentlichungsnummer : **0 023 657**
**B1**

# (12) EUROPÄISCHE PATENTSCHRIFT

(45) Veröffentlichungstag der Patentschrift :
11.05.83

(21) Anmeldenummer : 80104276.3

(22) Anmeldetag : 21.07.80

(51) Int. Cl.³ : **F 16 C 39/04**, F 16 C 17/03,
F 16 C 13/04

(54) Hydrodynamisches Lager.

(30) Priorität : 02.08.79 DE 2931383

(43) Veröffentlichungstag der Anmeldung :
11.02.81 Patentblatt 81/06

(45) Bekanntmachung des Hinweises auf die Patenterteilung : 11.05.83 Patentblatt 83/19

(84) Benannte Vertragsstaaten :
AT BE DE FR GB IT SE

(56) Entgegenhaltungen :
DE A 2 812 835
DE C 549 825
DE C 561 819
DE C 857 712
US A 3 093 426

LUEGER « Lexikon der Technik », Band 1, « Grundlagen des Maschinenbaues » 1960, DEUTSCHE
VERLAGS-ANSTALT, Stuttgart Seite 176

(73) Patentinhaber : **Krupp Polysius AG**
**Graf-Galen-Strasse 17**
**D-4720 Beckum (DE)**

(72) Erfinder : **Heinemann, Otto**
**Galileistrasse 8**
**D-4722 Ennigerloh (DE)**
Erfinder : **Lücke, Helmut**
**Zum Igelsbusch 2**
**D-4720 Beckum 2 (DE)**
Erfinder : **Schössler, Werner**
**Zeppelinstrasse 22**
**D-4730 Ahlen (DE)**
Erfinder : **Heiringhoff, Burkhard**
**Theodor-Heuss-Strasse 19**
**D-4740 Oelde (DE)**
Erfinder : **Krumme, Helmut**
**Königstrasse 29**
**D-4724 Wadersloh (DE)**

(74) Vertreter : **Tetzner, Volkmar, Dr.-Ing. Dr. Jur.**
**Van-Gogh-Strasse 3**
**D-8000 München 71 (DE)**

## Hydrodynamisches Lager

Die Erfindung betrifft ein hydrodynamisches Lager, enthaltend wenigstens einen Lagerschuh mit einem Unterteil und einem darauf kipp- und drehbeweglich abgestützten Oberteil sowie eine als Anfahrhilfe und zugleich zur Gewährleistung einer Mindesthöhe des Lagerspaltes im Betrieb dienende, ein- und ausschaltbare Einrichtung zur Erzeugung eines hydrodynamischen Druckes im Lagerspalt.

Im Gegensatz zu hydrostatischen Gleitlagern, denen das Druckmittel unter einem bestimmten Mindestdruck zugeführt werden muß, kann bei einem hydrodynamischen Gleitlager das zur Erzeugung eines hydrodynamischen Druckes im Lagerspalt erforderliche Druckmittel weitgehend drucklos der Lagerfläche zugeführt werden, da der hydrodynamische Druck aufgrund der Geometrie des Lagerschuhoberteiles durch eine keilförmige Druckmittelschicht aufgebaut wird.

Ein wesentlicher Nachteil eines hydrodynamischen Lagers besteht darin, daß während des Anfahrvorganges im Lagerspalt nur eine dünne oder überhaupt keine Druck- bzw. Schmiermittelschicht vorhanden ist. Um in diesem kritischen Anfahrzustand die Lagerreibung zu verringern, ist die Verwendung von ein- und ausschaltbaren Anfahrhilfen bekannt, die zusätzlich einen hydrostatischen Druck im Lagerspalt erzeugen.

Bei bekannten Ausführungen dieser Art (DE-C-561 819 und DE-C-857 712) wird die als Anfahrhilfe dienende Einrichtung zur Erzeugung eines statischen Druckes im Lagerspalt durch den Bedienungsmann von Hand ein- und ausgeschaltet. Es liegt auf der Hand, daß der Betrieb einer solchen Ausführung durch den Personalbedarf aufwendig ist.

Soweit darüber hinaus bei diesen bekannten Ausführungen (vgl. DE-C-857 712) beim Anfahrvorgang der gesamte Druck im Lagerspalt statisch (durch die erwähnte, ein- und ausschaltbare Einrichtung) aufgebaut wird, werden hierfür außerordentlich große Druckmittel-Leistungen benötigt, da sich im Lager nach einem längeren Stillstand vielfach keine Schmiermittelschicht mehr zwischen den Lagerteilen befindet. Bei sehr großen Lagern wird demgemäß der Aufwand für die rein statische Erzeugung des gesamten Druckes beim Anfahrvorgang unverhältnismäßig hoch.

Für das Anfahren von Maschinen mit Segment-Drucklagern ist es auch bekannt (DE-C-549 825), in Ölkanäle, die in den Lagerflächen der Segmente vorgesehen sind, vor dem Anfahren Drucköl einzupressen, um dadurch eine Schrägstellung der Segmente und die Bildung von Ölkeilen zwischen den Segmenten und den Tragflächen der Laufringe bereits im Ruhezustand zu erreichen. Zur Sicherung, daß diese Hilfsvorrichtung auch wirklich eingeschaltet ist, kann eine zwangsweise Kopplung mit den für die Inbetriebsetzung zu bedienenden sonstigen Geräten vorgesehen werden.

Es ist weiterhin bekannt (DE-A1-2 812 835), eine als Anfahrhilfe und zur Gewährleistung einer Mindesthöhe des Lagerspaltes im Betrieb dienende, ein- und ausschaltbare Einrichtung zur Erzeugung eines hydrostatischen Druckes im Lagerspalt durch Thermoelemente zu steuern, die die Temperatur der Lagerschuhe nahe ihrer Gleitfläche messen. Überschreitet die Lagertemperatur einen ersten Sollwert, so wird eine Hochdruckpumpe eingeschaltet ; erreicht die Lagertemperatur einen zweiten Sollwert, so wird der gelagerte Teil aus Sicherheitsgründen stillgesetzt.

Eine solche temperaturabhängige Überwachung und Steuerung hat sich in der Praxis wegen ihrer verhältnismäßig großen Trägheit als unbefriedigend erwiesen. Erfolgt nämlich eine Alarmmeldung über die Lagertemperatur erst dann, wenn der Lagerzapfen bereits einige Sekunden im Mischreibungsbereich auf den Lagern läuft, so führt dies zu einer starken Abtragung des Lagermetalls. Tritt ein solcher Störungsfall häufiger auf, so ist bald kein Lagermetall mehr vorhanden, so daß das Lager ausgetauscht werden muß. Die Ursache dieser unerwünscht großen Trägheit der Steuereinrichtung liegt darin, daß eine im Lager auftretende Temperaturerhöhung im Hinblick auf den notwendigen Wärmeübergang in das Lagermetall von den Thermofühlern nur indirekt und demgemäß mit beträchtlicher Zeitverzögerung registriert wird.

Der Erfindung liegt daher die Aufgabe zugrunde, ein hydrodynamisches Lager der eingangs genannten Art zu schaffen, das sich bei einfacher und zuverlässiger Konstruktion durch ein besonders rasches, verzögerungsfreies Ansprechen der zur Erzeugung eines hydrostatischen Druckes im Lagerspalt dienenden, ein- und ausschaltbaren Einrichtung auszeichnet.

Diese Aufgabe wird erfindungsgemäß dadurch gelöst, daß die Einrichtung in Abhängigkeit von dem im Lagerspalt herrschenden hydrodynamischen Druck ein- und ausschaltbar ist.

Eine Steuerung der Einrichtung in Abhängigkeit von dem im Lagerspalt herrschenden hydrodynamischen Druck ist eine direkte, völlig verzögerungsfrei arbeitende Steuerung. Sie verhindert sowohl beim Anfahrvorgang als auch im laufenden Betrieb, daß die Lagerflächen auch nur ganz kurzzeitig im Mischreibungsbereich laufen. Durch die praktisch ohne jede Totzeit erfolgende Steuerung der ein- und ausschaltbaren Einrichtung wird eine Abnutzung des weichen Lagermetalles mit Sicherheit vermieden. Das erfindungsgemäße Lager zeichnet sich daher durch eine hohe Betriebssicherheit aus.

Zweckmäßige Ausgestaltungen der Erfindung sind Gegenstand der Unteransprüche und werden im Zusammenhang mit der Beschreibung einiger Ausführungsbeispiele näher erläutert.

In der Zeichnung zeigen

Figur 1 eine Vertikalschnittansicht einer ersten Ausführungsform eines Lagerschuhes des erfindungsgemäßen hydrodynamischen Lagers ;

Figur 2 eine Aufsicht auf den Lagerschuh gemäß Fig. 1 ;

Figur 3 drei zu einem hydrodynamischen Lager gehörende Lagerschuhe einschließlich des hydraulischen Leitungssystems ;

Figur 4 eine Vertikalschnittansicht eines gegenüber dem Beispiel der Fig. 1 und 2 modifizierten Lagerschuhes.

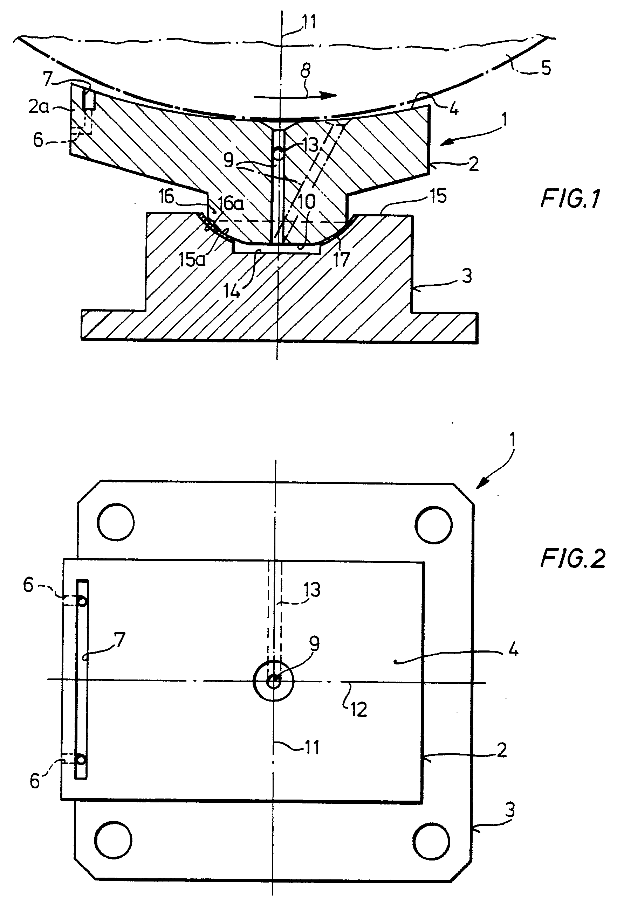

Der in den Fig. 1 und 2 dargestellte Lagerschuh 1 enthält einen Oberteil 2 und einen diesen Oberteil 2 kipp- und drehbeweglich bzw. taumelbeweglich abstützenden Unterteil 3. Durch die die Oberseite des Oberteiles 2 bildende Lagerfläche 4 soll ein — in Fig. 1 nur strichpunktiert angedeutetes — Drehelement 5 hydrodynamisch gelagert werden. Zu diesem Zweck wird über zwei Druckmittelanschlüsse 6 ein hydraulisches Druck- bzw. Schmiermittel einer an einem seitlichen Rand in die Lagerfläche 4 eingearbeiteten Verteilernute 7 drucklos oder doch weitgehend drucklos zugeführt.

Der Lagerschuhoberteil 2 ist flügelartig einseitig verlängert, und zwar auf der Seite 2a (Zulaufseite des sich in Richtung des Pfeiles 8 bewegenden Drehelementes 5). Zumindest die mittlere Zone (Fig. 1) der Lagerfläche 4 ist der Umfangskontur des Drehelementes 5 näherungsweise angepaßt. Durch diese Ausbildung des Lagerschuhoberteiles 2 kann sich zwischen dem Drehelement 5 und der Lagerfläche 4 eine in Drehrichtung (Pfeil 8) abnehmende keilförmige Druckmittelschicht und somit der entsprechende Lagerspalt ausbilden. Die Größe des Lagerspaltes hängt von mehreren Faktoren ab, etwa der Geometrie des Lagerschuhoberteiles 2, der Drehzahl und dem Gewicht des Drehelements 5.

Durch den Lagerschuhoberteil 2 geht eine Verbindungsbohrung 9 hindurch, die die Lagerfläche 4 mit der Unterseite 10 des Oberteiles 2 verbindet. Diese Verbindungsbohrung 9 dient zur hydraulischen Druckentlastung der mechanischen Abstützung des Oberteiles 2 auf dem Unterteil 3, und ist gleichzeitig an eine später noch zu erläuternde Einrichtung zur Überwachung des hydrodynamischen Druckes im Lagerspalt angeschlossen, wobei diese Überwachungseinrichtung ihrerseits steuerungsmäßig mit einer als Anfahrhilfe und zugleich zur Gewährleistung einer Mindesthöhe des Lagerspaltes im Betrieb dienenden Einrichtung in Verbindung steht, die in Abhängigkeit vom hydrodynamischen Druck im Lagerspalt ein- und ausschaltbar ist.

Die Verbindungsbohrung 9 durchsetzt etwa vertikal den Lagerschuhoberteil 2, wobei ihre Mittelachse etwa auf der vertikalen Mittelebene 11 des zu lagernden Drehelementes 5 sowie — im Grundriß des Lagerschuhoberteiles betrachtet — etwa auf der Längsmittelebene 12 der Lagerfläche 4 liegt. Diese Anordnung der Verbindungsbohrung 9 gilt jedoch nur für den Fall, in dem der sogenannte « Druckberg » des Schmiermittelfilmes (dünnste Stelle der keilförmigen Schmiermittelfilmausbildung zwischen Lagerfläche und Drehelement) etwa im Bereich der vertikalen Mittelebene 11 liegt.

Bei einer gegenüber Fig. 1 etwas veränderten Formgebung des Lagerschuhoberteiles kann sich jedoch der Schmiermittel-« Druckberg » auch etwa s seitlich versetzt ausbilden, so daß dann — wie in Fig. 1 strichpunktiert angedeutet ist — die obere Mündung der Verbindunbsbohrung entsprechend der Ausbildung des « Druckberges » versetzt im Lagerschuhoberteil vorgesehen ist, wobei die Verbindungsbohrung selbst dann entsprechend schräg zu einer (noch zu erläuternden) Druckentlastungskammer 14 verläuft.

Die Verbindungsbohrung 9 besitzt einen seitlich nach außen geführten Abzweigkanal 13, der den Anschluß für die zuvor erwähnte Drucküberwachungseinrichtung bildet.

Zur Erzielung einer hydraulischen Druckentlastung für die mechanische Abstützung mündet die Verbindungsbohrung 9 mit ihrem unteren Ende in einer Druckentlastungskammer 14 aus, die in die Oberseite 15 des Lagerschuhoberteiles 3 eingearbeitet und von der Unterseite 10 des Lagerschuhoberteiles 2 abgedeckt ist. Die mechanische Abstützung selbst wird von einer die Druckentlastungskammer 14 umgebenden, kalottenförmigen Ringstützfläche 15a in der Oberseite 15 des Unterteiles 3 einerseits und von einer passend dazu an der Unterseite 10 ausgeführten, ebenfalls ring- und kalottenförmigen Gegenstützfläche 16a gebildet, die an der Unterseite eines zapfenartig nach unten vorstehenden zentralen Teiles 16 des Lagerschuhunterteiles 3 konvex ausgebildet ist. Demgegenüber ist die Ringstützfläche 15a konkav in die Oberseite 15 des Lagerschuhunterteiles 3 eingearbeitet.

Der Lagerschuhunterteil 3 ist im wesentlichen einstückig ausgebildet und wird fest an seinem Aufstellungsort montiert.

Wird bei einem hydrodynamischen Lager nur ein einziger Lagerschuh der vorstehend beschriebenen Art verwendet, dann ist die bereits erwähnte, in den Fig. 1 und 2 nicht veranschaulichte ein- und ausschaltbare Einrichtung (die als Anfahrhilfe und zur Gewährleistung einer Mindesthöhe des Lagerspaltes im Betrieb dient) über eine ebenfalls nicht veranschaulichte Druckleitung, die zweckmäßig wenigstens ein Rückschlagventil enthält, sowie über den Abzweigkanal 13 an die Verbindungsbohrung 9 angeschlossen (ebenso wie die bereits erwähnte Drucküberwachungseinrichtung).

Bei dem so ausgestatteten hydrodynamischen Lager wird stets, vor allem während des Betriebes, der im Lagerspalt herrschende hydrodynamische Druck mit Hilfe der Drucküberwachungseinrichtung festgestellt und überwacht. Weicht dieser Druck von einem vorgegebenen Sollwert ab, so wird über die Drucküberwachungseinrichtung die Einrichtung zur Erzeugung eines zusätzlichen hydrostatischen Druckes im Lagerspalt eingeschaltet.

Für eine zuverlässige Funktion des Lagers sowie für dessen Anpassung an eventuelle Auslenkbewegungen des Drehelementes 5 ist es wichtig, daß der Lagerschuhoberteil 2 kipp- und drehbeweglich auf dem Unterteil 3 abgestützt ist, wofür die kalottenförmige Ringstützfläche 15a und die dazu entsprechend ausgebildete Gegenstützfläche 16a sowie zusätzlich die hydraulische Druckentlastung über die Verbindungsbohrung 9 und die Druckentlastungskammer 14 sorgen.

Damit sich im Lagerspalt ein einwandfreier hydrodynamischer Druck aufbauen kann, ist es wichtig, daß die Ringstützfläche 15a und die Gegenstützfläche 16a die von ihnen umgebene Druckentlastungskammer 14 trotz der notwendigen Kipp- und Drehbeweglichkeit vollkommen nach außen hin abdichten. Zu diesem Zweck ist die im Lagerschuhunterteil 3 eingearbeitete Ringstützfläche 15a mit einer Auflage, beispielsweise einer Gewebeauflage 17, ausgekleidet, die mit Polytetrafluoräthylen beschichtet ist.

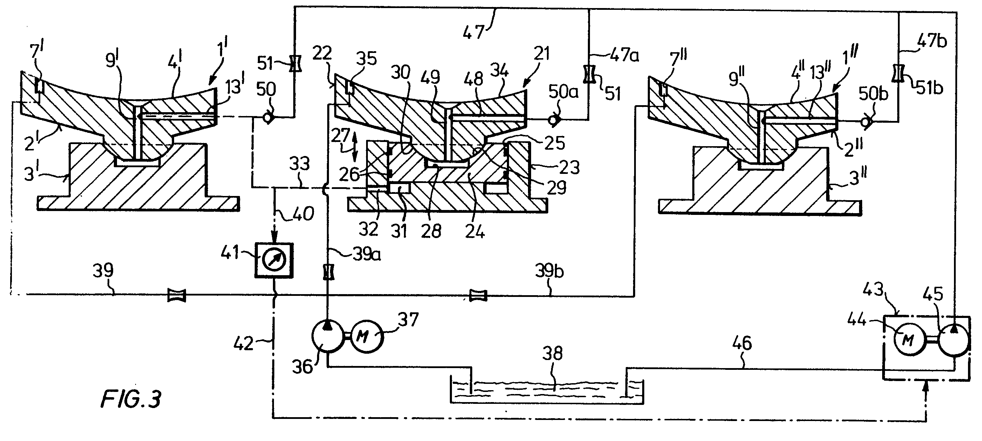

Insbesondere für die Lagerung von größeren Drehelementen (z. B. schwere Drehtrommeln mit großem Durchmesser) wird das hydrodynamische Lager zweckmäßig mit mehreren Lagerschuhen ausgestattet. Fig. 3 zeigt ein Ausführungsbeispiel eines hydrodynamischen Lagers, bei dem drei Lagerschuhe 1', 1" und 21 verwendet werden, von denen zwei, in diesem Falle die beiden äußeren Lagerschuhe 1' und 1", konstruktiv genauso ausgeführt sind, wie der anhand der Fig. 1 und 2 beschriebene Lagerschuh 1, also mit einstückig ausgebildetem, festem Unterteil 3' bzw. 3", auf denen die Lagerschuhoberteile 2' bzw. 2" kipp- und drehbeweglich abgestützt sind. Im Gegensatz dazu ist der — in Fig. 3 mittlere — Lagerschuh 21 in seinem Unterteil 23 etwas modifiziert, während sein Oberteil 22 in gleicher Weise konstruiert ist wie der Lagerschuhoberteil 2 gemäß Fig. 1 und 2.

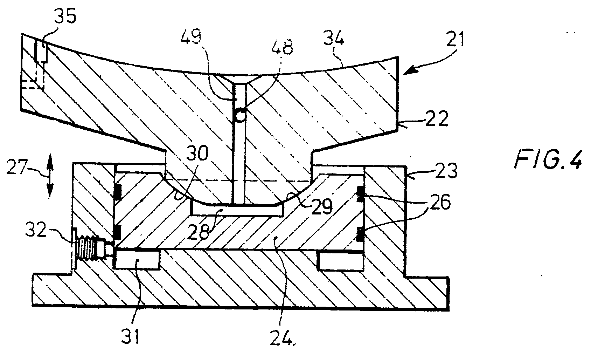

Dieser dritte Lagerschuh 21 (und gegebenenfalls jeder weitere in einem solchen hydrodynamischen Lager verwendete Lagerschuh) enthält — vgl. Fig. 4 — in seinem Unterteil 23 einen in bezug auf das zu lagernde Drehelement radial anstellbaren Hydraulikkolben 24, der in einer zylindrischen Ausnehmung 25 dieses Unterteiles 23 abgedichtet (Ringdichtungen 26) geführt und dabei in Richtung des Doppelpfeiles 27 vertikal beweglich ist. Dieser Hydraulikkolben weist an seiner Oberseite die bereits anhand der Fig. 1 erläuterte Druckentlastungskammer 28 und die dort ebenfalls bereits erläuterte Ringstützfläche des Unterteiles 23 auf, auf der sich die entsprechend dazu ausgebildete und ebenfalls ring- und kalottenförmige Gegenstützfläche des Lagerschuhoberteiles 22 in gleicher Weise abstützt wie anhand der Fig. 1 beschrieben wurde.

An der Unterseite des Hydraulikkolbens 25 befindet sich in dem Lagerschuhunterteil 23 eine hydraulische Druckkammer 31 (vorzugsweise als äußere Ringkammer ausgebildet), die einen nach außen führenden Druckanschluß 32 besitzt.

Wie Fig. 3 zeigt, steht die hydraulische Druckkammer 31 über ihren Druckanschluß 32, eine Druckleitung 33 und den im Lagerschuhoberteil 2' des Lagerschuhes 1' vorhandenen Abzweigkanal 13' mit der Verbindungsbohrung 9' in Verbindung. Auf diese Weise kann die Unterseite des Hydraulikkolbens 24 des Lagerschuhes 21 mit dem gleichen Druck beaufschlagt werden, der in der Verbindungsbohrung 9' des Lagerschuhes 1' herrscht, wodurch alle Lagerschuhe 1', 21 und 1" stets selbsttätig auf gleichen Lastanteil eingestellt werden.

Die Lagerflächen 4', 4" bzw. 34 der Lagerschuhe 1', 1", 21 werden im Beispiel der Fig. 3 über ihre Verteilernuten 7', 7" bzw. 35 alle von einer gemeinsamen Versorgungspumpe 36 mit Druckmittel (im allgemeinen Öl) gespeist. Die Pumpe 36 wird von einem Motor 37 angetrieben und aus einem Tank 38 gespeist. Das Zuführen des Druckmittels zu den Lagerflächen erfolgt dabei — wie allgemein bei hydrodynamischen Lagern üblich — weitgehend drucklos über Leitungen 39, 39a, 39b, in denen gegebenenfalls Drosseln (wie angedeutet) vorhanden sein können.

In Fig. 3 ist auch die Steuerung mit der ein- und ausschaltbaren Einrichtung, die als Anfahrhilfe und zur Gewährleistung einer Mindesthöhe des Lagerspaltes im Betrieb dient, schematisch angedeutet. An die die Verbindungsbohrung 9' des Lagerschuhes 1' mit der Druckkammer 31 des Lagerschuhes 21 verbindende Druckleitung 33 ist eine nur strichpunktiert angedeutete Steuerleitung 40 angeschlossen, die zu der Drucküberwachungseinrichtung 41 führt. Diese Einrichtung 41 stellt hier lediglich den im Lagerspalt des Lagerschuhes 1' jeweils vorhandenen Druck fest und leitet über eine Steuerleitung 42 entsprechende Signale an die ein- und ausschaltbare Einrichtung 43 weiter. Auf diese Weise wird in Abhängigkeit vom hydrodynamischen Druck im Lagerspalt beim Anfahren sowie beim Unterschreiten einer Mindesthöhe des Lagerspaltes im Betrieb ein zusätzlicher hydrostatischer Druck erzeugt. Die ein- und ausschaltbare Einrichtung 43 enthält eine von einem Motor 44 angetriebene Druckmittelpumpe 45, deren Ansaugseite über eine Ansaugleitung 46 mit dem bereits genannten Druckmitteltank 38 in Verbindung steht, während die Druckseite der Pumpe 45 über Druckleitungen 47, 47a und 47b an die entsprechenden Abzweigkanäle 13', 48, 13" der zugehörigen Verbindungsbohrungen 9', 49, 49" der drei Lagerschuhe 1', 21 bzw. 1" angeschlossen ist. In diesen Druckleitungen 47, 47a und 47b sind ferner Rückschlagventile 50, 50a bzw. 50b und Drosseln 51, 51a und 51b angeordnet.

In Fig. 3 sind die drei veranschaulichten Lagerschuhe 1', 1", 21 des hydrodynamischen Lagers in einer Ebene nebeneinander dargestellt ; in der Praxis erfolgt die Anordnung der drei Lagerschuhe selbstverständlich mit entsprechenden Winkelabständen auf einem gedachten Kreisbogen um das zu lagernde Drehelement.

**Ansprüche**

1. Hydrodynamisches Lager, enthaltend wenigstens einen Lagerschuh (1) mit einem Unterteil (3) und einem darauf kipp- und drehbeweglich abgestützten Oberteil (2) sowie eine als Anfahrhilfe und zugleich zur Gewährleistung einer Mindesthöhe des Lagerspaltes im Betrieb dienende, ein- und ausschaltbare Einrichtung (43) zur Erzeugung eines hydrostatischen Druckes im Lagerspalt, dadurch gekennzeichnet, daß die Einrichtung (43) in Abhängigkeit von dem im Lagerspalt herrschenden hydrodynamischen Druck ein- und ausschaltbar ist.

2. Lager nach Anspruch 1, dadurch gekennzeichnet, daß die die Lagerfläche des Lagerschuhes (1) bildende Oberseite des Oberteiles (2) mit dessen Unterseite (10) durch eine Verbindungsbohrung (9) verbunden ist, die zur hydraulischen Druckentlastung der mechanischen Abstützung des Oberteiles auf dem Unterteil dient und an die eine Einrichtung (41) zur Überwachung des hydrodynamischen Druckes im Lagerspalt angeschlossen ist, wobei diese Drucküberwachungseinrichtung (41) steuerungsmäßig mit der als Anfahrhilfe und zur Gewährleistung einer Mindesthöhe des Lagerspaltes im Betrieb dienenden, ein- und ausschaltbaren Einrichtung (43) in Verbindung steht.

3. Lager nach Anspruch 2, dadurch gekennzeichnet, daß die ein- und ausschaltbare Einrichtung (43) über eine wenigstens ein Rückschlagventil (50, 50a, 50b) enthaltende Druckleitung (47, 47a, 47b) an die Verbindungsbohrung (9', 9", 49) im Lagerschuhoberteil (2', 2", 22) angeschlossen ist.

4. Lager nach den Ansprüchen 2 und 3, dadurch gekennzeichnet, daß ein Abzweigkanal (13) der Verbindungsbohrung (9) seitlich nach außen geführt ist und den Anschluß für die Drucküberwachungseinrichtung (41) sowie für die Druckleitung (47, 47a, 47b) der ein- und ausschaltbaren Einrichtung (43) bildet.

5. Lager nach den Ansprüchen 1 und 2, dadurch gekennzeichnet, daß das in die Lagerfläche (4) mündende obere Ende der Verbindungsbohrung (9) im Bereich der größten Druckhöhe der Schmiermittelzone sowie — bei Betrachtung des Grundrisses des Lagerschuhoberteiles — etwa auf der Längsmittelachse (12) der Lagerfläche (4) liegt.

6. Lager nach den Ansprüchen 1 und 2, dadurch gekennzeichnet, daß die Verbindungsbohrung (9, 49) mit ihrem unteren Ende in eine Druckentlastungskammer (14, 28) mündet, die in der Oberseite (15) des Lagerschuhunterteiles (3, 23) vorgesehen und von der Unterseite (10) des Lagerschuhoberteiles (2, 22) abgedeckt ist.

7. Lager nach Anspruch 6, dadurch gekennzeichnet, daß die Druckentlastungskammer (14, 28) von einer kalottenförmigen Ringstützfläche (15a, 29) umgeben ist, die mit einer passend dazu an der Unterseite des Lagerschuhoberteiles (2, 22) ausgeführten, ebenfalls ring- und kalottenförmigen Gegenstützfläche (16a, 30) zusammenwirkt und die mit dieser Gegenstützfläche die mechanische Abstützung des Lagerschuhes (1, 21) bildet.

8. Lager nach Anspruch 7, dadurch gekennzeichnet, daß die Ringstützfläche (15a, 29) konkav in die Oberseite des Lagerschuhunterteiles (3, 23) eingearbeitet ist, während die Gegenstützfläche (16a, 30) an der Unterseite eines zapfenartig nach unten vorstehenden zentralen Teiles (z. B. 16) des Lagerschuhoberteiles (2, 22) konvex ausgebildet ist.

9. Lager nach den vorhergehenden Ansprüchen, mit wenigstens drei Lagerschuhen, dadurch gekennzeichnet, daß zwei Lagerschuhe (1', 1") einen im wesentlichen einstückig ausgebildeten, festen Unterteil (3', 3") besitzen, während der dritte und gegebenenfalls jeder weitere Lagerschuh (21) in seinem Unterteil (23) einen — in bezug auf das zu lagernde Drehelement — radial anstellbaren, in diesem Unterteil geführten Hydraulikkolben (24) enthält, der an seiner Oberseite die Druckentlastungskammer (28) und die Ringstützfläche (29) für die mechanische Abstützung aufweist und dessen Unterseite über eine in diesem Unterteil vorhandene hydraulische Druckkammer (31) sowie über eine Druckleitung (33) mit der Verbindungsbohrung (9') eines der beiden Lagerschuhe (1') mit festem Unterteil (3') verbunden ist.

10. Lager nach wenigstens einem der Ansprüche 7 bis 9, dadurch gekennzeichnet, daß von der mechanischen Abstützung zumindest die im Lagerschuhunterteil (3) eingearbeitete Ringstützfläche (15a) mit einer Polytetrafluoräthylen enthaltenden Auflage (17) ausgekleidet ist.

11. Lager nach wenigstens einem der vorhergehenden Ansprüche, dadurch gekennzeichnet, daß allen Lagerschuhen (1', 1", 21) eine gemeinsame Versorgungspumpe (36) zur weitgehend drucklosen Zufuhr des zur Erzeugung des hydrodynamischen Druckes im Lagerspalt dienenden Druckmittels zugeordnet ist.

12. Lager nach den Ansprüchen 1 und 2, dadurch gekennzeichnet, daß die ein- und ausschaltbare Einrichtung (43) eine von einem Motor (44) angetriebene Druckmittelpumpe (45) enthält, die in Abhängigkeit von den Steuersignalen der Drucküberwachungseinrichtung (41) dem bzw. den Lagerschuhen (1', 1", 21) zuschaltbar oder hiervon abschaltbar ist.

## Claims

1. Hydrodynamic bearing, containing at least one bearing shoe (1) with a lower portion (3) and an upper portion (2) which is supported thereon so as to be tiltably and rotatably movable and an arrangement (43) which can be cut in and out in order to produce a hydrostatic pressure in the bearing gap and which serves to aid starting and ensure a minimum height of the bearing gap in operation, characterised in that the arrangement (43) can be cut in and out as a function of the hydrodynamic pressure prevailing in the bearing gap.

2. Bearing as claimed in claim 1, characterised in that the upper surface of the upper portion (2) which forms the bearing surface of the bearing shoe (1) is connected to the lower surface (10) thereof by a connecting bore (9) which serves for hydraulic pressure relief of the mechanical support of the upper portion on the lower portion and is connected to one arrangement (41) for monitoring the hydrodynamic pressure in the bearing gap, this pressure monitoring arrangement (41) being connected for control purposes to the arrangement (43) which can be cut in and out and serves to aid starting and ensure a minimum height of the bearing gap in operation.

3. Bearing as claimed in claim 2, characterised in that the arrangement (43) which can be cut in and out is connected to the connecting bore (9', 9", 49) in the upper portion of the bearing shoe (2', 2", 22) via a pressure line (47, 47a, 47b) containing at least one non-return valve (50, 50a, 50b).

4. Bearing as claimed in claims 2 and 3, characterised in that a branch channel (13) of the connecting bore (9) is directed laterally outwards and forms the connection for the pressure monitoring arrangement (41) and for the pressure line (47, 47a, 47b) of the arrangement (43) which can be cut in and out.

5. Bearing as claimed in claims 1 and 2, characterised in that the upper end of the connecting bore (9) opening into the bearing surface (4) lies in the region of the greatest pressure of the lubrication zone approximately on the longitudinal central axis (12) of the bearing surface (4) — when the upper portion of the bearing shoe is viewed in plan form.

6. Bearing as claimed in claims 1 and 2, characterised in that the lower end of the connecting bore (9, 49) opens into a pressure relief chamber (14, 28) which is provided in the upper surface (15) of the lower portion (3, 23) of the bearing shoe and is covered by the lower surface (10) of the upper portion (2, 22) of the bearing shoe.

7. Bearing as claimed in claim 6, characterised in that the pressure relief chamber (14, 28) is enclosed by a spherical annular support surface (15a, 29), which co-operates with an equally annular and spherical matching support surface (16a, 30) which is adapted thereto and constructed on the lower side of the upper portion of the bearing shoe (2, 22), and together with the matching support surface forms the mechanical support for the bearing shoe (1, 21).

8. Bearing as claimed in claim 7, characterised in that the annular support surface (15a, 29) is machined concavely into the upper surface of the lower portion (3, 23) of the bearing shoe, whilst the matching support surface (16a, 30) is constructed convexly on the lower surface of a central part (e. g. 16) of the upper portion (2, 22) of the bearing shoe which projects downwards like a pin.

9. Bearing as claimed in the preceding claims, with at least three bearing shoes, characterised in that two bearing shoes (1', 1") have a fixed lower portion (3', 3") which is constructed essentially in one piece, whilst the third and any further bearing shoe (21) has in its lower portion (23) a hydraulic piston (24) which is radially adjustable — with reference to the rotary element to be mounted — and guided in this lower portion and has the pressure relief chamber (28) and the annular support surface (29) for mechanical support on its upper surface, the lower surface thereof being connected to the connecting bore (9') of one of the two bearing shoes (1') with a fixed lower portion (3') via a hydraulic pressure chamber (31) provided in this lower portion and a pressure line (33).

10. Bearing as claimed in at least one of claims 7 to 9, characterised in that of the mechanical support means at least the annular support surface (15a) machined in the lower portion (3) of the bearing shoe is provided with a coating (17) containing polytetrafluoroethylene.

11. Bearing as claimed in at least one of the preceding claims, characterised in that a common supply pump (36) for essentially pressure-free supply of the pressure medium which serves to produce the hydrodynamic pressure in the bearing gap is associated with all of the bearing shoes (1', 1", 21).

12. Bearing as claimed in claims 1 and 2, characterised in that the arrangement (43) which can be cut in and out contains a pump (45) for the pressure medium which is driven by a motor (44) and can be connected to or disconnected from the bearing shoe or shoes (1', 1", 21) as a function of the control signals from the pressure monitoring arrangement (41).

**Revendications**

1. Palier hydrodynamique comprenant au moins un coussinet (1) qui comporte une partie inférieure (3) sur laquelle prend appui une partie supérieure (2) avec liberté d'osciller et de tourner, ledit palier étant par ailleurs équipé d'un dispositif (43) pouvant être branché et débranché, servant à faciliter le démarrage et également à garantir une hauteur minimale du jeu du palier en service ainsi qu'à produire une pression hydrostatique dans ce jeu, palier caractérisé en ce que ledit dispositif (43) se branche et se débranche en fonction de la pression hydrodynamique qui règne dans le jeu.

2. Palier selon la revendication 1, caractérisé en ce qu'un trou de liaison (9) qui fait communiquer la face supérieure de la partie supérieure (2), qui forme la surface portante du coussinet (1), avec sa face inférieure (10) est destiné à provoquer une détente de la pression hydraulique de l'appui mécanique de la partie supérieure sur la partie inférieure, ce trou de liaison étant raccordé à un dispositif (41) de surveillance de la pression hydrodynamique régnant dans le jeu, ce dispositif de surveillance (41) communiquant avec un autre dispositif (43) qu'il commande, qui peut être branché et débranché et qui sert à faciliter le démarrage et à garantir une hauteur minimale du jeu en service.

3. Palier selon la revendication 2, caractérisé en ce que le dispositif (43) pouvant être branché et débranché est raccordé par une canalisation (47, 47a, 47b) équipée d'au moins une soupape de retenue (50, 50a, 50b) au trou de liaison (9', 9", 49) de la partie supérieure du coussinet (2', 2", 22).

4. Palier selon l'une des revendications 2 et 3, caractérisé en ce qu'un canal de dérivation (13) du trou de liaison (9) débouche latéralement vers l'extérieur et forme le raccord au dispositif (41) de surveillance de la pression ainsi qu'à la canalisation (47, 47a, 47b) provenant du dispositif (43) pouvant être branché et débranché.

5. Palier selon l'une des revendications 1 et 2, caractérisé en ce que l'extrémité supérieure du trou de liaison (9) qui débouche dans la surface portante (4) se trouve à proximité du lieu de la zone de lubrification auquel règne la pression maximale ainsi que approximativement sur l'axe de symétrie longitudinal (12) de la surface portante (4) — en vue en plan sur la partie supérieure du coussinet — .

6. Palier selon l'une des revendications 1 et 2, caractérisé en ce que l'extrémité inférieure du trou de liaison (9, 49) débouche dans une chambre de détente (14, 28) prévue dans la face supérieure (15) de la partie inférieure (3, 23) du coussinet et recouverte par la face inférieure (10) de la partie supérieure (2, 22) du coussinet.

7. Palier selon la revendication 6, caractérisé en ce que la chambre de détente (14, 28) est entourée d'une surface annulaire d'appui en forme de calotte (15a, 29) qui coopère avec une contre-surface d'appui (16a, 30) de forme complémentaire qui est réalisée sur la face inférieure de la partie supérieure (2, 22) du coussinet et qui est aussi annulaire et en forme de calotte, ladite surface annulaire formant avec cette contre-surface l'appui mécanique du coussinet (1, 21).

8. Palier selon la revendication 7, caractérisé en ce que la surface annulaire d'appui (15a, 29), dont la forme est concave, est usinée dans la face supérieure de la partie inférieure (3, 23) du coussinet, tandis que la contre-surface d'appui (16a, 30), dont la forme est convexe, est réalisée dans la face inférieure d'un élément central en forme de tourillon (par exemple 16) en saillie vers le bas sur la partie supérieure (2, 22) du coussinet.

9. Palier selon l'une quelconque des revendications précédentes et comprenant au moins trois coussinets, caractérisé en ce que deux coussinets (1', 1") comprennent une partie inférieure fixe (3, 3") essentiellement en une pièce, tandis que le troisième coussinet (21) et éventuellement tous les autres renferment dans leur partie inférieure (23) un piston hydraulique (24) qui est guidé dans cette partie inférieure et qui est réglable radialement — par rapport à l'élément rotatif supporté —, ce piston comportant dans sa face supérieure la chambre de détente (28) ainsi que la surface annulaire d'appui mécanique (29), tandis que sa face inférieure communique avec le trou de liaison (9') de l'un des deux coussinets (1') à partie inférieure fixe (3') par une chambre hydraulique de pression (31) qui se trouve dans ladite partie inférieure ainsi que par une canalisation (33).

10. Palier selon l'une quelconque des revendications 7 à 9, caractérisé en ce qu'au moins la surface annulaire d'appui mécanique (15a) qui est usinée dans la partie inférieure (3) du coussinet est recouverte d'un revêtement (17) qui contient du polytétrafluoréthylène.

11. Palier selon l'une quelconque des revendications précédentes, caractérisé en ce qu'une pompe commune d'alimentation (36) affectée à tous les coussinets (1', 1", 21) est destinée à diriger pratiquement sans pression le fluide servant à produire la pression hydrodynamique dans le jeu du palier.

12. Palier selon l'une des revendications 1 et 2, caractérisé en ce que le dispositif (43) pouvant être branché et débranché comprend une pompe (45) commandée par un moteur (44) et pouvant être branchée sur le ou les coussinets (1', 1", 21) ou en être débranchée en fonction de signaux de commande émis par le dispositif (41) de surveillance de la pression.

FIG.1

FIG.2

FIG.3

FIG.4